# EUROPEAN PATENT SPECIFICATION

(11) **EP 2 771 815 B1**
(45) Date of publication and mention of the grant of the patent: **18.10.2017**
(21) Application number: 11793768.0
(22) Date of filing: 06.12.2011
(51) Int. Cl.: G06F 17/30, H04L 12/70, H04W 40/24

(54) **DATABASE WITH AGING MECHANISM AND METHOD FOR MANAGING A DATABASE**
DATENBANK MIT ALTERUNGSMECHANISMUS UND VERFAHREN ZUM VERWALTEN EINER DATANBANK
BASE DE DONNEES AVEC MECANISME D'AGE ET PROCEDE DE GESTION D'UNE BASE DE DONEES

(43) Date of publication of application: 03.09.2014
(73) Proprietor: Huawei Technologies Co., Ltd., Longgang District Shenzhen, Guangdong 518129 (CN)
(72) Inventor: RECHES, Shlomo, 80992 Munich (DE)
(74) Representative: Kreuz, Georg Maria
(86) International application number: PCT/EP2011/071907
(87) International publication number: WO 2013/083183

(56) References cited:
- US-A- 6 125 371
- US-A1- 2008 107 052
- US-A1- 2008 222 111

## Description

### TECHNICAL FIELD

The present invention pertains to a database with aging mechanism and a method for managing a database. In particular, the invention pertains to dynamic databases in network devices, such as routers, switches, bridges, network traffic managers and the like.

### TECHNICAL BACKGROUND

Databases that are dynamically updated and that may only occupy a limited amount of memory space need to be continuously checked for obsolete or old entries. A clean-up, i.e. a deletion or overwriting of these entries helps to maintain the database in a functional state. Such a clean-up can be generally referred to as "aging" of a database, i.e. the removal of older database entries. Aging may for example be performed by means of data collection jobs. Removal of this data reduces the sizes of databases. Aging events usually involve massive amounts of calculation, especially when hierarchical aging effects have to be considered, i.e. effects of a deletion of an entry that cause the need to update other database entries further up or down a database hierarchy.

Document US 6,125,371 A discloses methods for aging a database by assigning time stamps to each of the database entries, creating multiple versions of a database entry that is subject to an update transaction, monitoring the aging time of each of the versions of each of the database entries by comparing the time stamps, and deleting one or more versions of database entries in order to free up memory space, depending on the monitoring of the aging times.

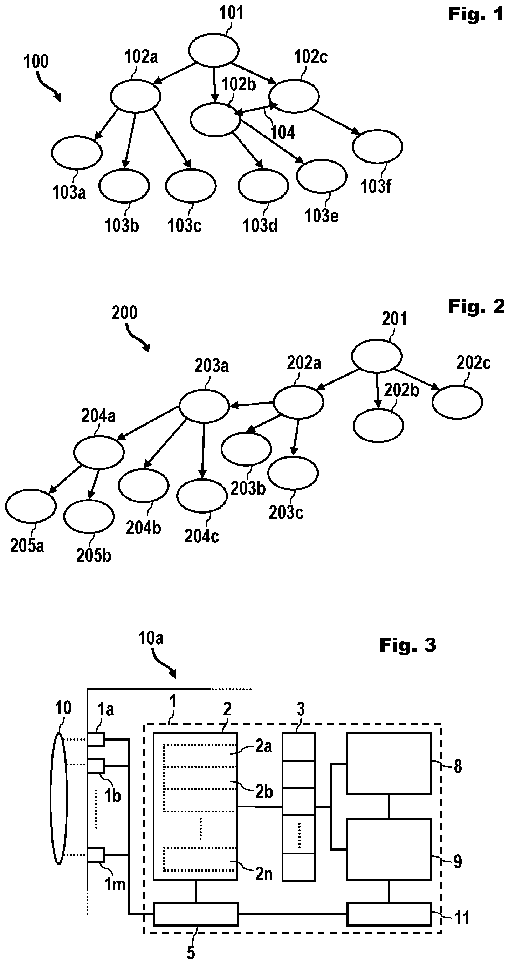

Fig. 1 shows a schematical illustration of an exemplary database 100 that is organized as a hierarchical database with a dataset root 101, several branches 102a, 102b, 102c and corresponding leaves 103a, 103b, 103c, 103d, 103e and 103f. For example, the branch 102a is a first tier hierarchy level entry which the second tier hierarchy level entries 103a, 103b and 103c are dependent upon. The database 100 of Fig. 1 is exemplarily shown with two hierarchy levels, although the number of levels and the respective number of entries per level is not limited in any way. Furthermore, there may be intralevel interconnections 104 between entries of the same tier, which is exemplarily shown for branches 102b and 102c.

When a specific entry at one of the leaves is to be aged, i.e. deleted or over-written, the respective entries of the corresponding branch will have to be checked for any pointers or references to the leaf to be aged, for example timestamps, entry counters or similar values. For example, when the leaf 103d is to be aged, the entry 102b will have to be checked for consistency with the state of the entry after the deletion of the leaf 103d. Moreover, it might be necessary to also check the entry 102c of the database 100, since the entries 102b and 102c are interdependent by way of the interconnection 104. In each of the entries 102b and 102c, several re-calculations will have to be performed in order to age the leaf 103d without leaving a trace in the updated database 100, otherwise severe database corruption might occur during the ongoing operation of the database 100.

For large databases with lots of entries and a large amount of entries to be aged during the operation, these calculations will use up a lot of time and resources. Thus, there is a need for a database managing method and a respective database, with which the amount of updating calculations is reduced when aging entries of the database.

### SUMMARY OF THE INVENTION

An idea of the present invention is to divide an aging period, i.e. the maximum time span an entry of a database may reside in the database without being aged, into a number n of time slices. For each of the n time slices, a separate slice database is maintained in parallel. Each of the n slice databases reflects the respective state changes of the database in slice periods that span different fractions of an aging period, ranging from the current time back in time to different fractions of the aging period. Events that change the database are evaluated with respect to the fraction of the aging period in which database contents are affected by the event. Accordingly, only those k out of n slice databases are updated with the event that do not reach further back than the fraction of the aging period that was evaluated.

Advantageously, with this procedure the oldest slice database, i.e. the one that spans over the whole aging period at that moment, may be aged after 1/n-th of an aging period has passed, since all changes that were caused by events in the following (n-1)/n-th of the aging period have been reflected in the remaining n-1 slice databases already. On the other hand, all events that are older than one aging period only affected the oldest slice database to be aged, hence preventing the need to re-calculate any of the remaining n-1 slice databases which were not affected by these oldest events at all. In other words, by maintaining a number of n slice databases in parallel with the aforementioned method, the need for checking and re-calculating entries of a database upon aging of entries is completely circumvented.

Consequently, a first aspect of the present invention relates to a method for managing a database, comprising determining a time interval which corresponds to the maximum time span a database entry is to remain in the database before being removed, dividing the time interval into at least a first and a second time slice, and updating at least a first and a second slice database with database events, wherein the at least the first and the scond slice database be created as copies of the database. After a time span corresponding to the duration of the first time slice has elapsed, the method comprises replacing the first slice database with the second slice database and creating a new second slice database as copy of the previous second slice database. Wherein updating at least a first and a second slice database with database events comprises:
checking what data packet the database events pertains to, wherein the database events are the reception of a new data packet or the transmission of a data packet;
if the database events spans over all the time slices, then it is determined that the database events pertain to data packets that were already in the database during the first time slice, wherein these data packets are the oldest data packets and are therefore the first to expire after the time span has elapsed that corresponds to the duration of the first time slice, wherein information relating to this database event is relevant for the oldest version of the database, which is the first slice database;
updating the first slice database;
if the database events are determined to relate to data packets that have been included in the database in a time slice later than the first time slice;
updating other slice databases respectively

According to a first implementation of the first aspect the method further comprises dividing a database storage into at least a first and a second storage area, and updating the first and second storage area with database events, and, after the time span corresponding to the duration of the first time slice has elapsed, declaring the second storage area as the first storage area and overwriting the previous first storage area with database entries of a newly declared second storage area.

According to a second implementation of the first aspect the method further comprises dividing a database processing queue into at least a first and a second partial queue, the first partial queue including queue elements that are to expire after the elapse of the first time slice, and the second partial queue including queue elements that are not to expire after the elapse of the first time slice, creating a first queue pointer that points to the first element of the first partial queue, creating a second queue pointer that points to the first element of the second partial queue, and after the time span corresponding to the duration of the first time slice has elapsed, replacing the first queue pointer with the second queue pointer and replacing the second queue pointer with a new second queue pointer database.

According to a third implementation of the second implementation of the first aspect the first and second queue pointer point to the head of the first and second partial queue, respectively.

According to a fourth implementation of the second implementation of the first aspect the first and second queue pointer point to the tail of the first and second partial queue, respectively.

According to a fifth implementation of the first aspect a working access to the second slice database is denied, before the time span corresponding to the duration of the first time slice has elapsed.

According to a sixth implementation of the first aspect the database is a database for a network device. According to a seventh implementation of the first aspect the time interval is round trip time (RTT) which indicates the maximum time period which elapses between the transmittal of a data packet to any network node of the network and the reception of a response data packet at the network device.

According to an eighth implementation of the first aspect, on the occurrence of a database event, either updating the first and the second slice database with the event in parallel, if the database event does not pertain to database entries that are to expire after the elapse of the first time slice, or updating only the second slice database with the event, if the database event pertains to database entries that are to expire after the elapse of the first time slice is performed.

According to a second aspect of the present invention, a database system comprises a database storage configured to store database entries of a main database, at least a first and a second slice database as copies of the main database, a database update controller configured to determine a time interval which corresponds to the maximum time span a database entry is to remain in the database before being removed, to divide the time interval into at least a first and a second time slice, and to update at least a first and a second slice database with database events, wherein the at least the first and the scond slice database be created as copies of the main database, and a database aging controller configured to replace the first slice database with the second slice database and to replace the second slice database with a new second slice database after a time span corresponding to the duration of the first time slice has elapsed. Wherein the database unpdate confroller configured to update at least a first and a second slice database with database events comprises:
checking what data packet the database events pertains to, wherein the database events are the reception of a new data packet or the transmission of a data packet;
if the database events spans over all the time slices, then it is determined that the database events pertain to data packets that were already in the database during the first time slice, wherein these data packets are the oldest data packets and are therefore the first to expire after the time span has elapsed that corresponds to the duration of the first time slice, wherein information relating to this database event is relevant for the oldest version of the database, which is the first slice database;
updating the first slice database;
if the database events are determined to relate to data packets that have been included in the database in a time slice later than the first time slice;
updating other slice databases respectively

According to a first implementation of the second aspect, the database storage is divided into at least a first and a second storage area, the database update controller is configured to update the first and second storage area with database events, and the database aging controller is configured to declare the second storage area as the first storage area and to cause the previous first storage area to be overwritten with database entries of a newly declared second storage area after the time span corresponding to the duration of the first time slice has elapsed.

According to a second implementation of the second aspect, the database system further comprises a database processing queue, which is divided into at least a first and a second partial queue, the first partial queue including queue elements that are to expire after the elapse of the first time slice, and the second partial queue including queue elements that are not to expire after the elapse of the first time slice, and a database queue pointer controller which is configured to create a first queue pointer that points to the first element of the first partial queue, a second queue pointer that points to the first element of the second partial queue, and which is configured to replace the first queue pointer with the second queue pointer and to replace the previous second queue pointer with a new second queue pointer after the time span corresponding to the duration of the first time slice has elapsed.

According to a third implementation of the second implementation of the second aspect, the first and second queue pointer point to the head of the first and second partial queue, respectively.

According to a fourth implementation of the second implementation of the second aspect, the first and second queue pointer point to the tail of the first and second partial queue, respectively.

According to a fifth implementation of the second aspect, the database system is configured to deny a working access to the second slice database, before the time span corresponding to the duration of the first time slice has elapsed.

According to a sixth implementation of the second aspect, on the occurrence of a database event, the database updating controller is configured to either update the first and the second slice database with the event in parallel, if the database event does not pertain to database entries that are to expire after the elapse of the first time slice, or to update only the second slice database with the event, if the database event pertains to database entries that are to expire after the elapse of the first time slice,

According to a third aspect of the invention, a network device comprises a database system according to the second aspect of the invention, wherein the database is a database for the network device, and wherein the time interval is round trip time (RTT) which indicates the maximum time period which elapses between the transmittal of a data packet to any network node of the network and the reception of a response data packet at the network device.

According to a first implementation of the third aspect the network device is a network router. According to a second implementation of the third aspect the network device is a network switch. According to a third implementation of the third aspect the network device is a network gateway. According to a fourth implementation of the third aspect the network device is a network bridge. According to a fifth implementation of the third aspect the network device is a network traffic manager.

### BRIEF DESCRIPTION OF THE FIGURES

The accompanying figures are included to provide a further understanding of the disclosure. They illustrate embodiments and may help to explain the principles of the invention in conjunction with the description. Other embodiments and many of the intended advantages, envisaged principles and functionalities will be appreciated as they become better understood by reference to the detailed description as following hereinbelow. The elements of the figures are not necessarily drawn to scale relative to each other. In general, like reference numerals designate corresponding similar parts.
- Fig. 1: schematically illustrates a hierarchically organized database.
- Fig. 2: schematically illustrates a hierarchically organized database in a network router according to an embodiment.
- Fig. 3: schematically illustrates a database according to an embodiment.
- Fig. 4: schematically illustrates a procedure for updating slice databases of a database of Fig. 3 according to an embodiment.
- Fig. 5: schematically illustrates a procedure for updating queue pointers of a database of Fig. 3 according to an embodiment.
- Fig. 6: schematically illustrates a procedure for updating a database storage of a database of Fig. 3 according to an embodiment.
- Fig. 7: schematically illustrates a method for managing a database of a database of Fig. 3 according to an embodiment.

### DETAILED DESCRIPTION OF EMBODIMENTS

In the following detailed description, reference is made to the accompanying drawings, and in which, by way of illustration, specific embodiments are shown. It should be obvious that other embodiments may be utilized and structural or logical changes may be made without departing from the scope of the present invention. Unless specifically noted otherwise, functions, principles and details of each embodiment may be combined with other embodiments. Generally, this application is intended to cover any adaptations or variations of the specific embodiments discussed herein. Hence, the following detailed description is not to be taken in a limiting sense, and the scope of the present invention is defined by the appended claims.

Embodiments may include methods and processes that may be embodied within machine readable instructions provided by a machine readable medium, the machine readable medium including, but not being limited to devices, apparatuses, mechanisms or systems being able to store information which may be accessible to a machine such as a computer, a calculating device, a processing unit, a networking device, a portable computer, a microprocessor or the like. The machine readable medium may include volatile or non-volatile media as well as propagated signals of any form such as electrical signals, digital signals, logical signals, optical signals, acoustical signals, acousto-optical signals or the like, the media being capable of conveying information to a machine.

In the following, reference is made to methods and method steps, which are schematically and exemplarily illustrated in flow charts and block diagrams. It should be understood that the methods described in conjunction with those illustrative drawings may easily be performed by embodiments of systems, apparatuses and/or devices as well. In particular, it should be obvious that the systems, apparatuses and/or devices capable of performing the detailed block diagrams and/or flow charts are not necessarily limited to the systems, apparatuses and/or devices shown and detailed herein below, but may rather be different systems, apparatuses and/or devices. The terms "first", "second", "third", etc. are used merely as labels, and are not intended to impose numerical requirements on their objects or to establish a certain ranking of importance of their objects.

Fig. 2 schematically illustrates a hierarchically organized database 200 in a network router according to an embodiment. The network router may include a traffic manager that manages data packets arriving at ingress ports of the network router and being forwarded to different destinations via a number of egress ports. The traffic manager may update the respective database trice per packet - once, when the packet is received, i.e. is put in a packet queue, and again, when the packet is finally transmitted, i.e. is dequeued from the packet queue. The state at each of the database elements may for example hold the total number of bytes in the queue, a leaky bucket level of the queue that reflects the credit of this queue to send data and possibly other information about the packets being processed.

The database 200 may for example have a root node 201 that indicates the specific network router, port entries 202a, 202b, 202c that indicate the ingress and/or egress ports of the network router, subscriber groups 203a, 203b, 203c that are associated with a respective port 202a, subscribers 204a, 204b, 204c that are members of a specific subscriber group 203a and packet classes 205a, 205b that a specific subscriber 204a is associated with. The database 200 is organized in a hierarchical structure with branches, subbranches and leaves that each include information about specific entries in the hierarchy at lower tiers. A database update event is triggered, when a packet is enqueued or dequeued, beginning at a leaf of the lowest tier, for example a packet class leaf 205a, 205b. The event propagates through the database tree, updating respective database entries in the parent nodes.

When a packet in the database 200 is to be aged, that is, to be removed from the queue if a maximum time interval that the packet is allowed to remain in the router is exceeded, any updating events in the respective database hierarchy that have been made with regard to this packet have to be reverted to the original state. With (typically) millions of packets to be aged the amount of database operations is considerable, if only one working instance of the database 200 is used.

Instead, a database system 1 as schematically illustrated in Fig. 3 may be used. The database system 1 may be a database for a network device 10a which is part of a network 10. The network device 10a may be a router, a switch, a gateway, a bridge, a network traffic manager or a similar network component. The network component 10a may have a number of ingress/egress ports 1a, 1b, ..., 1m through which data packets may be received and transmitted.

The database system 1 may include a database storage 2, a slice database storage 3, a database update controller 8, a database aging controller 9, a database processing queue 5 and a database queue pointer controller 11. The database storage 2 may be configured to store database entries of a main database, for example data packets and any database hierarchy components associated with the respective data packets, as exemplarily depicted in Fig. 2. To this end, the database storage 2 may be divided in a plurality of storage areas 2a, 2b, ..., 2n the number of which may be adapted to the respective database system 1.

The main database in the database storage 2 may be subject to aging, that is, after a time interval T which corresponds to the maximum time span a database entry is to remain in the database, respective data entries are removed from the database. For example, in the case of a network device 10a, the time interval T may be the round trip delay time or round trip time (RTT) which indicates the maximum time period which elapses between the transmittal of a data packet to any network node of the network 10 and the reception of a response data packet at the network device 10a.

The database update controller 8 may be coupled to the database aging controller 9 which may in turn be coupled to the database queue pointer controller 11. The database queue pointer controller 11 may be coupled to the database processing queue 5. The database processing queue 5 may be coupled to the database storage 2. The database storage 2 may be coupled to the slice database storage 3, which in turn may be coupled to the database update controller 8 and the a database aging controller 9.

The database update controller 8 may be be configured to control updating a database, for example slice databases held within the slice database storage 3. The database update controller 8 may perform database update events of the database system 1. The database aging controller 9 may be configured to control database aging events of the database system 1. The database queue pointer controller 11 may be configured to create queue pointers.

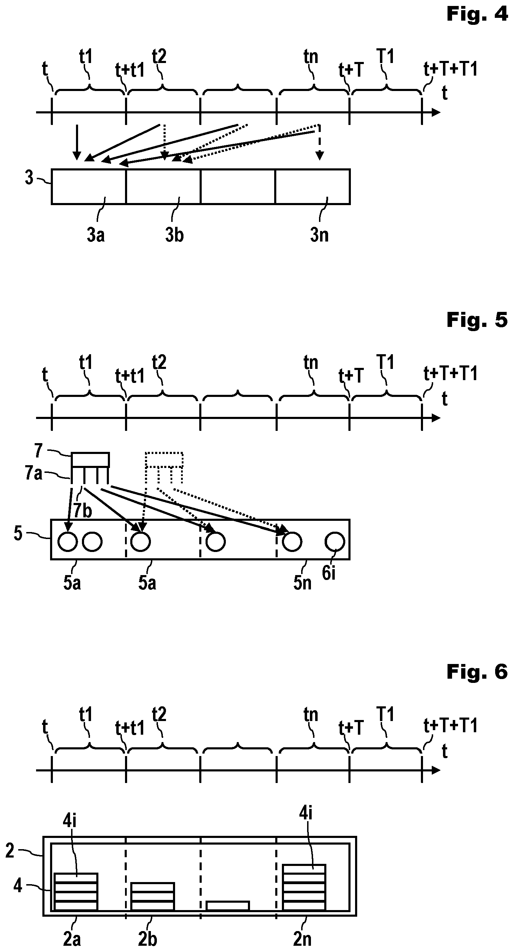

The function of the database system 1 of Fig. 3 will now be explained with respect to the schematically illustrated procedures of Figs. 4, 5 and 6. In each of the Figs. 4 to 6, a time line is shown. Initially, the database system 1 is assumed to be in a state at a time t+T, wherein t is the point in time furthest in the past of which information about database events still exists in the database and T is the determined time interval corresponding to the aging period of the database system 1. As time elapses, the database system 1 eventually arrives at a point in time t+T+T1, wherein T1 is the time span after which an aging event takes place. The aging event of the database system 1 may be controlled by the database aging controller 9. During the time span T1, the database update controller 8 may perform database update events of the database system 1 according to the procedures described in the following.

In the procedure depicted in Fig. 4, the aging period or time interval T, respectively, may be divided into a number n of time slices t1, t2, ..., tn. Exemplarily, a number n of 4 time slices is shown in Figs. 4 to 6, however, any number or time slices greater than one may be selected for dividing the time interval T. The time slices t1, t2, ..., tn may in one embodiment be of equal duration, however, it may be possible to vary the duration of the time slices t1, t2, ..., tn according to any duration pattern that might be useful for the aging procedure of the database system 1.

Associated with the time slices t1, t2, ..., tn a number n of slice databases 3a, 3b, ..., 3n may be created as copies of the main database. With other words, the slice databases each contains the whole database, with the difference between the slice databases being different update statuses associated with the time slices t1, t2, ..., tn. These slice databases 3a, 3b, ..., 3n may be maintained in parallel in a slice database storage 3. That means that the slice databases 3a, 3b, ..., 3n may get updated by the database update controller 8 at the same time during the operation of the database system 1 according to specific updating rules. One of the slice databases 3a, 3b, ..., 3n may be the working database, that is, any working access to the database system 1 will be directed to the working database and the remaining slice databases will be hidden from database inquiries. For example, in Fig. 4 the slice database 3a may be the working database.

The slice databases 3a, 3b, ..., 3n are ordered in their sequence of expiration, which means that the leftmost slice database 3a will be the first to expire and the rightmost slice database 3n the last to expire. The procedure of Fig. 4 starts at the point in time t+T. If a database event occurs, for example the reception of a new data packet or the transmission of a data packet in the database processing queue 5, the database event is checked what data packet the event pertains to. If the database event spans over all the time slices t1, t2, ..., tn, then it is determined that the event pertains to data packets that were already in the database system during the first time slice t1. These data packets are the oldest data packets and are therefore the first to expire after a time span T1 has elapsed that corresponds to the duration of the first time slice t1. Therefore, it is assumed that information relating to this database event is only relevant for the oldest version of the database, which is the first slice database 3a. Only the first slice database 3a gets updated by the database update controller 8, as indicated by the arrows with the continuous line.

On the other hand, if a database event is determined to only relate to data packets that have been included in the database in a time slice t2, ..., tn later than the first time slice t1, respective other slice databases 3b, ..., 3n get updated as well. For example, a database event determined to relate to data packets having been received in the second time slice t2, the slice databases 3a and 3b get updated. In other words, the later data packets a database event is associated with will expire, the more slice databases 3a, 3b, ..., 3n will get updated simultaneously.

After the time span T1 has elapsed, the database aging controller 9 may be configured to perform an aging event, that is to remove any obsolete data packets and database entries that relate to the respective data packets. In order to do so, the database aging controller 9 may replace the first slice database 3a with the second slice database 3b, the second slice database 3b with the third slice database, and so on, until the n-th slice database 3n replaces the (n-1)-th slice database 3n-1. The database aging controller 9 may then be configured to create a new n-th slice database as the current state of the database, for example as the previous n-th slice database 3n.

Since updates of database events that are to be aged have only been performed with respect to the first slice database 3a, the remaining slice databases 3b, ..., 3n already reflect the state of the database without any update events pertaining to the aged database entries. Therefore, no re-calculations of database entries will have to be performed. The aging of the database is merely done by evaluating database events with regard to their association to data packets and their time of expiration. By updating only select copies of the database, i.e. only certain slice databases 3a, 3b, ..., 3n, the respectively oldest slice database is already in the right state for becoming the new working database. By creating new n-th slice database 3n as copies of the current updating state, the slice databases are shifted with respect to their relative position to the working database. Since after the elapse of every time slice, the database aging controller 9 creates a new n-th slice database 3n as a fresh slice database, only database events that occur after this time slice will affect the fresh slice database. Therefore, the database aging controller 9 constantly creates staggered slice databases with different updating statuses in order to replace the previous working database with a fresh one in an aging event.

In addition to the slice databases 3a, 3b, ..., 3n the data packet queue 5 may be updated in a similar way, as will be explained with regard to the schematically illustrated procedure in Fig. 5. The database processing queue 5 may be divided into a number n of partial queues 5a, 5b, ..., 5n, wherein the first partial queue 5a includes queue elements 6i that are to expire after the elapse of the first time slice t1, and the n-th partial queue 5n includes queue elements 6i that are only to expire after the elapse of the n-th time slice tn. In other words, the first partial queue 5a is the oldest queue, wherein the n-th partial queue is the youngest queue. The database queue pointer controller 11 may be configured to create a first queue pointer 7a that points to the first element of the first partial queue 5a, a second queue pointer 7b that points to the first element of the second partial queue 5b and so on. The queue pointers 7a, 7b, ..., 7n may be prongs of a group pointer 7. The group pointer 7 may for example point to the respective heads of the queues or the tails of the queues. After the time span T1 corresponding to the duration of the first time slice t1 has elapsed the first queue pointer 7a may be replaced with the second queue pointer 7b, the second queue pointer 7b with the third queue pointer, and so on. Last, a new n-th queue pointer is created, that points to the new head or tail of the new n-th partial queue starting with the first data packet to arrive after the point in time t+T+T1. The group pointer 7 may be used to rotate the queue pointers 7, 7b, ..., 7n, that is the replaced first queue pointer 7a will become the new n-th queue pointer 7n upon aging the packet queue 5.

A procedure to manage the database storage 2 is schematically illustrated with respect to Fig. 6. The database storage 2 may be configured to store a database 4 having database entries 4i. In order to manage the database storage 2 directly with the actual data packets or indirectly through pointers to the actual data packets the database storage 2 may be divided into a plurality of storage areas 2a, 2b, ..., 2n, wherein the database update controller 8 is configured to store new database entries 4i that are to expire after the elapse of the first time slice t1 in the first storage area 2a, to store new database entries 4i that are to expire after the elapse of the second time slice t2 in the second storage area 2a, and so on, until data packets that will not expire until after the elapse of the n-th time slice tn are stored in the n-th storage area. By assigning a fixed buffer size to the respective storage areas 2a, 2b, ..., 2n, it may be possible to group up the database entries 4i according to their time of expiration. Therefore, when aging the database as the point in time t+T+T1, the writing pointer will simply skip to the next oldest storage area and the respective memory will be freed automatically for the next data packets or pointers which point to addresses for the data packets to arrive. Since the aged storage area only held data packets that expired after the point in time t+T+T1, no rearrangement of database entries 4i in the database storage 2 will become necessary. The database aging controller may simply be configured to declare the second storage area 2b as the first storage area 2a, and the n-th storage area 2n as the (n-1)-th storage area 2n-1.

The storage areas 2a to 2n may be cycled continuously through the time slices, so that after the elapse of each subsequent time slice the aged storage area may be replaced with a fresh one that only holds entries not to be aged yet at that specific point in time.

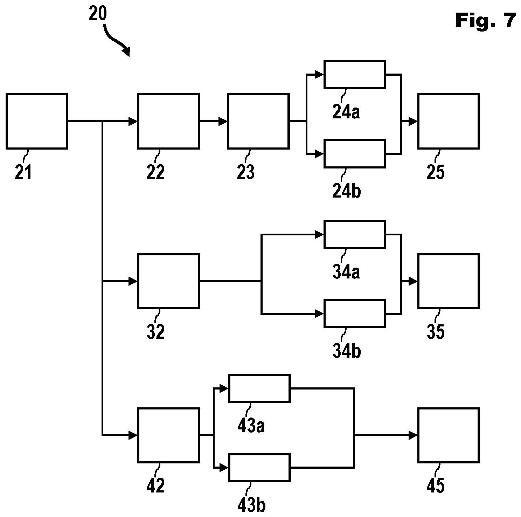

Fig. 7 schematically illustrates a method 20 for managing a database, for example a database 4 in a database system 1, which database system 1 is shown in Fig. 3. The method 20 for managing a database comprises a first step 21 of determining a time interval T which corresponds to the maximum time span a database entry 4i is to remain in the database 4 before being removed. In a second step 22, the time interval T may be divided into at least a first and a second time slice t1 and t2, respectively. Concurrently, in a step 32, a database storage 2 may be divided into at least a first and a second storage area 2a, 2b, ..., 2n and updated with data events, and in a step 42, a database processing queue 5 may be divided into at least a first and a second partial queue 5a, 5b, ..., 5n, the first partial queue 5a including queue elements 6i that are to expire after the elapse of the first time slice t1, and the second partial queue 5b including queue elements 6i that are not to expire after the elapse of the first time slice t1.

In a step 23, at least a first and a second slice database 3a, 3b, ..., 3n may be updated with database events. Simultaneously, in concomitant steps 43a and 43b, a first queue pointer 7a that points to the first element of the first partial queue 5a, and a second queue pointer 7b that points to the first element of the second partial queue 5b may be created.

When setting up the database system with the first and the second slice database, during a first time slice after initializing the database system, if a database event occurs, it may be determined what database entries 4i the database event pertains to. In a step 24a, the first and the second slice database 3a, 3b, ..., 3n may be updated with the event in parallel, if the database event does not pertain to database entries 4i that are to expire after the elapse of the first time slice t1. Similarly, new database entries 4i that are to expire after the elapse of the first time slice t1 may be stored in the first storage area 2a. If on the other hand, the database event pertains to database entries 4i that are to expire after the elapse of the first time slice t1, only the second slice database 3b may be updated with the event. Accordingly, new database entries 4i that are not to expire after the elapse of the first time slice t1 may be stored in the second storage area 2b.

After a time span T1 corresponding to the duration of the first time slice t1 has elapsed, an aging event may take place. In an aging step 25, the first slice database 3a may be replaced with the second slice database 3b and replace the second slice database 3b with a new second slice database. Simultaneously, in an aging step 35, the second storage area 2b may be declared as the first storage area 2a and the previous first storage area 2a may be overwritten with database entries of a newly declared second storage area. Finally, in an aging step 45, the first queue pointer 7a may be replaced with the second queue pointer 7b and the previous second queue pointer 7b may be replaced with a new second queue pointer.

The steps 21, 22, 23 and 25 of the method 20 may then be repeated for further time slices, so that the slice databases are shifted with respect to their relative position to the working database. Since after the elapse of every time slice, a new slice database is created as youngest slice database, only database events that occur after this time slice will affect this youngest slice database. Therefore, staggered slice databases with different updating statuses are created constantly in order to replace the previous working database with a fresh one in an aging event. By initializing a newly created slice database to a certain point in time, the need for re-calculations after each aging event is completely circumvented.

The advantage of the invention is that foldbacks of database updating events are not necessary, since slice databases, queue pointers and slice database storage areas are kept in parallel with staggered updating statuses.

With this database management system, as explained in conjunction with Figs. 3, 4, 5 and 6 and in conjunction with the method of Fig. 7, the need for time and resource consuming foldbacks of database updating events is completely obviated by maintaining a plurality of databases in parallel. Although more bandwidth will most likely have to be used, the advantages by being able to revert a database to an up-to-date state with virtually no calculation effort will in most cases outweigh this disadvantage. The methods and database system may be implemented in network devices, as shown in the exemplary embodiments, however, any other type of technical equipment that makes use of aging databases may be used equally.

## Claims

1. A method (20) for managing a database (4), comprising:
determining (21) a time interval (T) which corresponds to the maximum time span a database entry (4i) is to remain in the database (4) before being removed;
dividing (22) the time interval (T) into at least a first and a second time slice (t1, t2, ..., tn);
updating (23) at least a first and a second slice database (3a, 3b, ..., 3n) with database events, wherein the at least the first and the scond slice database (3a, 3b, ..., 3n) be created as copies of the database (4); and
after a time span (T1) corresponding to the duration of the first time slice (t1) has elapsed, replacing (25) the first slice database (3a) with the second slice database (3b) and replacing the second slice database with a new second slice database (3b);
wherein updating (23) at least the first and the second slice database (3a, 3b, ..., 3n) with database events comprising:
checking what data packet the database events pertains to, wherein the database events are the reception of a new data packet or the transmission of a data packet;
if the database events spans over all the time slices (t1, t2, ..., tn), then it is determined that the database events pertain to data packets that were already in the database during the first time slice (t1), wherein these data packets are the oldest data packets and are therefore the first to expire after the time span (T1) has elapsed that corresponds to the duration of the first time slice (t1), wherein information relating to this database event is relevant for the oldest version of the database, which is the first slice database (3a);
updating the first slice database (3a);
if the database events are determined to relate to data packets that have been included in the database in a time slice (t2, ..., tn) later than the first time slice (t1);
updating the second and further slice databases (3b, ..., 3n).

2. The method (20) of claim 1, further comprising:
dividing (32) a database storage (2) into at least a first and a second storage area (2a, 2b, ..., 2n) and updating the first and second storage area (2a, 2b, ..., 2n) with database events; and
after the time span (T1) corresponding to the duration of the first time slice (t1) has elapsed, declaring (35) the second storage area (2b) as the first storage area (2a) and overwriting the previous first storage area (2a) with database entries of a newly declared second storage area.

3. The method (20) of one of the claims 1 and 2, further comprising:
dividing (42) a database processing queue (5) into at least a first and a second partial queue (5a, 5b, ..., 5n), the first partial queue (5a) including queue elements (6i) that are to expire after the elapse of the first time slice (t1), and the second partial queue (5b) including queue elements (6i) that are not to expire after the elapse of the first time slice (t1); and
after the time span (T1) corresponding to the duration of the first time slice (t1) has elapsed, replacing (45) the first queue pointer (7a) with the second queue pointer (7b) and creating a new second queue pointer as copy of the previous second queue pointer (7b).

4. The method (20) of claim 3, wherein the first and second queue pointer (7a, 7b) point to the head of the first and second partial queue (5a, 5b, ..., 5n), respectively.

5. The method (20) of claim 3, wherein the first and second queue pointer (7a, 7b) point to the tail of the first and second partial queue (5a, 5b, ..., 5n), respectively.

6. The method (20) of one of the claims 1 to 5, wherein a working access to the second slice database (3b) is denied, before the time span (T1) corresponding to the duration of the first time slice (t1) has elapsed.

7. The method (20) of one of the claims 1 to 6, wherein the database (4) is a database for a network device (10a), and wherein the time interval (T) is round trip time (RTT) which indicates the maximum time period which elapses between the transmittal of a data packet to any network node of the network (10) and the reception of a response data packet at the network device (10a).

8. A database system (1), comprising:
a database storage (2) configured to store database entries (4i) of a main database (4);
at least a first and a second slice database (3a, 3b, ..., 3n);
a database update controller (8) configured to determine a time interval (T) which corresponds to the maximum time span a database entry (4i) is to remain in the database (4) before being removed, to divide the time interval (T) into at least a first and a second time slice (t1; t2), and to update at least a first and a second slice database (3a, 3b, ..., 3n) with database events, wherein the at least the first and the scond slice database (3a, 3b, ..., 3n) be created as copies of the main database (4); and
a database aging controller (9) configured to replace the first slice database (3a) with the second slice database (3b) and to replace the second slice database with a new second slice database (3b) after a time span (T1) corresponding to the duration of the first time slice (t1) has elapsed;
wherein the database unpdate confroller (8) configured to update at least the first and the second slice database (3a, 3b, ..., 3n) with database events comprising:
checking what data packet the database events pertains to, wherein the database events are the reception of a new data packet or the transmission of a data packet;
if the database events spans over all the time slices (t1, t2, ..., tn), then it is determined that the database events pertain to data packets that were already in the database during the first time slice (t1), wherein these data packets are the oldest data packets and are therefore the first to expire after the time span (T1) has elapsed that corresponds to the duration of the first time slice (t1), wherein information relating to this database event is relevant for the oldest version of the database, which is the first slice database (3a);
updating the first slice database (3a);
if the database events are determined to relate to data packets that have been included in the database in a time slice (t2, ..., tn) later than the first time slice (t1);
updating the second and further slice databases (3b, ..., 3n).

9. The database system (1) of claim 8, wherein the database storage (2) is divided into at least a first and a second storage area (2a, 2b, ..., 2n), wherein the database update controller (8) is configured to update the first and second storage area (2a, 2b, ..., 2n) with database events, and wherein the database aging controller (9) is configured to declare the second storage area (2b) as the first storage area (2a) and to cause the previous first storage area (2a) to be overwritten with database entries of a newly declared second storage area after the time span (T1) corresponding to the duration of the first time slice (t1) has elapsed.

10. The database system (1) of one of the claims 8 and 9, further comprising:
a database processing queue (5), which is divided into at least a first and a second partial queue (5a, 5b, ..., 5n), the first partial queue (5a) including queue elements (6i) that are to expire after the elapse of the first time slice (t1), and the second partial queue (2b) including queue elements (6i) that are not to expire after the elapse of the first time slice (t1); and
a database queue pointer controller (11) which is configured to create a first queue pointer (7a) that points to the first element of the first partial queue, a second queue pointer (7b) that points to the first element of the second partial queue (5b), and which is configured to replace the first queue pointer (7a) with the second queue pointer (7b) and to create a new second queue pointer as copy of the previous second queue pointer (7b) after the time span (T1) corresponding to the duration of the first time slice (t1) has elapsed.

11. The database system (1) of claim 10, wherein the first and second queue pointer (7a, 7b) point to the head of the first and second partial queue (5a, 5b, ..., 5n), respectively.

12. The database system (1) of claim 10, wherein the first and second queue pointer (7a, 7b) point to the tail of the first and second partial queue (5a, 5b, ..., 5n), respectively.

13. The database system (1) of one of the claims 8 to 12, wherein the database system (1) is configured to deny a working access to the second slice database (3b), before the time span (T1) corresponding to the duration of the first time slice (t1) has elapsed.

14. A network device (10a), comprising a database system (1) of one of the claims 8 to 13, wherein the database (4) is a database for the network device (10a), and wherein the time interval (T) is round trip time (RTT) which indicates the maximum time period which elapses between the transmittal of a data packet to any network node of the network (10) and the reception of a response data packet at the network device (10a).

15. The network device (10a) of claim 14, wherein the network device (10a) is one of the group of a network router, a network switch, a network gateway, a network bridge or a network traffic manager.

## Patentansprüche

1. Verfahren (20) zum Verwalten einer Datenbank (4), das Folgendes umfasst:
Bestimmen (21) eines Zeitintervalls (T), das der maximalen Zeitspanne entspricht, die ein Datenbankeintrag (4i) in der Datenbank (4) verbleiben soll, bevor er gelöscht wird; Unterteilen (22) des Zeitintervalls (T) in mindestens ein erstes und ein zweites Zeitsegment (t1, t2, ..., tn);
Aktualisieren (23) mindestens einer ersten und einer zweiten Segmentdatenbank (3a, 3b, ..., 3n) mit Datenbankereignissen, wobei mindestens die erste und die zweite Segmentdatenbank (3a, 3b, ..., 3n) als Kopien der Datenbank (4) generiert werden; und nachdem eine Zeitspanne (T1), die der Dauer des ersten Zeitsegments (t1) entspricht, verstrichen ist, Ersetzen (25) der ersten Segmentdatenbank (3a) durch die zweite Segmentdatenbank (3b) und Ersetzen der zweiten Segmentdatenbank durch eine neue zweite Segmentdatenbank (3b);
wobei das Aktualisieren (23) mindestens der ersten und der zweiten Segmentdatenbank (3a, 3b, ..., 3n) mit Datenbankereignissen Folgendes umfasst:
Überprüfen, zu welchem Datenpaket die Datenbankereignisse gehören, wobei die Datenbankereignisse der Empfang eines neuen Datenpaketes oder das Senden eines Datenpaketes sind;
wenn die Datenbankereignisse sich über alle Zeitsegmente (t1, t2, ..., tn) erstrecken, so wird bestimmt, dass die Datenbankereignisse zu Datenpaketen gehören, die bereits während des ersten Zeitsegments (t1) in der Datenbank waren, wobei diese Datenpakete die ältesten Datenpakete sind und darum die ersten sind, die verfallen, nachdem die Zeitspanne (T1) verstrichen ist, die der Dauer des ersten Zeitsegments (t1) entspricht, wobei Informationen bezüglich dieses Datenbankereignisses für die älteste Version der Datenbank relevant sind, die die erste Segmentdatenbank (3a) ist; Aktualisieren der ersten Segmentdatenbank (3a);
wenn bestimmt wird, dass sich die Datenbankereignisse auf Datenpakete beziehen, die in der Datenbank in einem Zeitsegment (t2, ..., tn) enthalten waren, das später als das erste Zeitsegment (t1) liegt;
Aktualisieren der zweiten und weiterer Segmentdatenbanken (3b, ..., 3n).

2. Verfahren (20) nach Anspruch 1, das des Weiteren Folgendes umfasst:
Unterteilen (32) eines Datenbankspeichers (2) in mindestens einen ersten und einen zweiten Speicherbereich (2a, 2b, ..., 2n) und Aktualisieren des ersten und zweiten Speicherbereichs (2a, 2b, ..., 2n) mit Datenbankereignissen; und
nachdem die Zeitspanne (T1), die der Dauer des ersten Zeitsegments (t1) entspricht, verstrichen ist, Deklarieren (35) des zweiten Speicherbereichs (2b) als den ersten Speicherbereich (2a) und Überschreiben des früheren ersten Speicherbereichs (2a) mit Datenbankeinträgen eines neu deklarierten zweiten Speicherbereichs.

3. Verfahren (20) nach einem der Ansprüche 1 und 2, das des Weiteren Folgendes umfasst:
Unterteilen (42) einer Datenbank-Verarbeitungswarteschlange (5) in mindestens eine erste und eine zweite Teilwarteschlange (5a, 5b, ..., 5n), wobei die erste Teilwarteschlange (5a) Warteschlangenelemente (6i) enthält, die nach dem Verstreichen des ersten Zeitsegments (t1) verfallen sollen, und die zweite Teilwarteschlange (5b) Warteschlangenelemente (6i) enthält, die nach dem Verstreichen des ersten Zeitsegments (t1) nicht verfallen sollen; und
nachdem die Zeitspanne (T1), die der Dauer des ersten Zeitsegments (t1) entspricht, verstrichen ist, Ersetzen (45) des ersten Warteschlangenzeigers (7a) durch den zweiten Warteschlangenzeiger (7b) und Erzeugen eines neuen zweiten Warteschlangenzeigers als Kopie des früheren zweiten Warteschlangenzeigers (7b).

4. Verfahren (20) nach Anspruch 3, wobei der erste und der zweite Warteschlangenzeiger (7a, 7b) zum Kopf der ersten bzw. der zweiten Teilwarteschlange (5a, 5b, ..., 5n) zeigen.

5. Verfahren (20) nach Anspruch 3, wobei der erste und der zweite Warteschlangenzeiger (7a, 7b) zum Ende der ersten bzw. der zweiten Teilwarteschlange (5a, 5b, ..., 5n) zeigen.

6. Verfahren (20) nach einem der Ansprüche 1 bis 5, wobei ein Arbeitszugriff auf die zweite Segmentdatenbank (3b) verweigert wird, bevor die Zeitspanne (T1), die der Dauer des ersten Zeitsegments (t1) entspricht, verstrichen ist.

7. Verfahren (20) nach einem der Ansprüche 1 bis 6, wobei die Datenbank (4) eine Datenbank für eine Netzwerkkomponente (10a) ist, und wobei das Zeitintervall (T) eine Umlaufzeit (Round Trip Time, RTT) ist, die den maximalen Zeitraum angibt, der zwischen dem Senden eines Datenpaketes an einen Netzknoten des Netzwerkes (10) und dem Empfang eines Antwortdatenpaketes in der Netzwerkkomponente (10a) verstreicht.

8. Datenbanksystem (1), das Folgendes umfasst:
einen Datenbankspeicher (2), der dafür konfiguriert ist, Datenbankeinträge (4i) einer Hauptdatenbank (4) zu speichern;
mindestens eine erste und eine zweite Segmentdatenbank (3a, 3b, ..., 3n);
eine Datenbankaktualisierungssteuereinheit (8), die dafür konfiguriert ist, ein Zeitintervall (T) zu bestimmen, das der maximalen Zeitspanne entspricht, die ein Datenbankeintrag (4i) in der Datenbank (4) verbleiben soll, bevor er gelöscht wird, das Zeitintervall (T) in mindestens ein erstes und ein zweites Zeitsegment (t1; t2) zu unterteilen, und mindestens eine erste und eine zweite Segmentdatenbank (3a, 3b, ..., 3n) mit Datenbankereignissen zu aktualisieren, wobei mindestens die erste und die zweite Segmentdatenbank (3a, 3b, ..., 3n) als Kopien der Hauptdatenbank (4) generiert werden; und
eine Datenbank-Alterungssteuereinheit (9), die dafür konfiguriert ist, die erste Segmentdatenbank (3a) durch die zweite Segmentdatenbank (3b) zu ersetzen und die zweite Segmentdatenbank durch eine neue zweite Segmentdatenbank (3b) zu ersetzen, nachdem eine Zeitspanne (T1), die der Dauer des ersten Zeitsegments (t1) entspricht, verstrichen ist;
wobei die Datenbankaktualisierungssteuereinheit (8), die dafür konfiguriert ist, mindestens die erste und zweite Segmentdatenbank (3a, 3b, ..., 3n) mit Datenbankereignissen zu aktualisieren, Folgendes umfasst:
Überprüfen, zu welchem Datenpaket die Datenbankereignisse gehören, wobei die Datenbankereignisse der Empfang eines neuen Datenpaketes oder das Senden eines Datenpaketes sind;
wenn die Datenbankereignisse sich über alle Zeitsegmente (t1, t2, ..., tn) erstrecken, so wird bestimmt, dass die Datenbankereignisse zu Datenpaketen gehören, die bereits während des ersten Zeitsegments (t1) in der Datenbank waren, wobei diese Datenpakete die ältesten Datenpakete sind und darum die ersten sind, die verfallen, nachdem die Zeitspanne (T1) verstrichen ist, die der Dauer des ersten Zeitsegments (t1) entspricht, wobei Informationen bezüglich dieses Datenbankereignisses für die älteste Version der Datenbank relevant sind, die die erste Segmentdatenbank (3a) ist;
Aktualisieren der ersten Segmentdatenbank (3a);
wenn bestimmt wird, dass sich die Datenbankereignisse auf Datenpakete beziehen, die in der Datenbank in einem Zeitsegment (t2, ..., tn) enthalten waren, das später als das erste Zeitsegment (t1) liegt;
Aktualisieren der zweiten und weiterer Segmentdatenbanken (3b, ..., 3n).

9. Datenbanksystem (1) nach Anspruch 8, wobei der Datenbankspeicher (2) in mindestens einen ersten und einen zweiten Speicherbereich (2a, 2b, ..., 2n) unterteilt ist,
wobei die Datenbankaktualisierungssteuereinheit (8) dafür konfiguriert ist, den ersten und den zweiten Speicherbereich (2a, 2b, ..., 2n) mit Datenbankereignissen zu aktualisieren, und
wobei die Datenbank-Alterungssteuereinheit (9) dafür konfiguriert ist, den zweiten Speicherbereich (2b) als den ersten Speicherbereich (2a) zu deklarieren und zu veranlassen, dass der frühere erste Speicherbereich (2a) mit Datenbankeinträgen eines neu deklarierten zweiten Speicherbereichs überschrieben wird, nachdem die Zeitspanne (T1), die der Dauer des ersten Zeitsegments (t1) entspricht, verstrichen ist.

10. Datenbanksystem (1) nach einem der Ansprüche 8 und 9, das des Weiteren Folgendes umfasst:
eine Datenbank-Verarbeitungswarteschlange (5), die in mindestens eine erste und eine zweite Teilwarteschlange (5a, 5b, ..., 5n) unterteilt ist, wobei die erste Teilwarteschlange (5a) Warteschlangenelemente (6i) enthält, die nach dem Verstreichen des ersten Zeitsegments (t1) verfallen sollen, und die zweite Teilwarteschlange (2b) Warteschlangenelemente (6i) enthält, die nach dem Verstreichen des ersten Zeitsegments (t1) nicht verfallen sollen; und
eine Datenbank-Warteschlangenzeiger-Steuereinheit (11), die dafür konfiguriert ist, einen ersten Warteschlangenzeiger (7a) zu generieren, der zu dem ersten Element der ersten Teilwarteschlange zeigt, einen zweiten Warteschlangenzeiger (7b) zu generieren, der zu dem ersten Element der zweiten Teilwarteschlange (5b) zeigt, und der dafür konfiguriert ist, den ersten Warteschlangenzeiger (7a) durch den zweiten Warteschlangenzeiger (7b) zu ersetzen und einen neuen zweiten Warteschlangenzeiger als Kopie des früheren zweiten Warteschlangenzeigers (7b) zu generieren, nachdem die Zeitspanne (T1), die der Dauer des ersten Zeitsegments (t1) entspricht, verstrichen ist.

11. Datenbanksystem (1) nach Anspruch 10, wobei der erste und der zweite Warteschlangenzeiger (7a, 7b) zum Kopf der ersten bzw. der zweiten Teilwarteschlange (5a, 5b, ..., 5n) zeigen.

12. Datenbanksystem (1) nach Anspruch 10, wobei der erste und der zweite Warteschlangenzeiger (7a, 7b) zum Ende der ersten bzw. der zweiten Teilwarteschlange (5a, 5b, ..., 5n) zeigen.

13. Datenbanksystem (1) nach einem der Ansprüche 8 bis 12, wobei das Datenbanksystem (1) dafür konfiguriert ist, einen Arbeitszugriff auf die zweite Segmentdatenbank (3b) zu verweigern, bevor die Zeitspanne (T1), die der Dauer des ersten Zeitsegments (t1) entspricht, verstrichen ist.

14. Netzwerkkomponente (10a), die ein Datenbanksystem (1) nach einem der Ansprüche 8 bis 13 umfasst, wobei die Datenbank (4) eine Datenbank für die Netzwerkkomponente (10a) ist, und wobei das Zeitintervall (T) eine Umlaufzeit (Round Trip Time, RTT) ist, die den maximalen Zeitraum angibt, der zwischen dem Senden eines Datenpaketes an einen Netzknoten des Netzwerkes (10) und dem Empfang eines Antwortdatenpaketes in der Netzwerkkomponente (10a) verstreicht.

15. Netzwerkkomponente (10a) nach Anspruch 14, wobei die Netzwerkkomponente (10a) eine aus folgender Gruppe ist: ein Netzwerkrouter, eine Netzwerkvermittlung, ein Netzwerkgateway, eine Netzwerkbrücke, oder ein Netzwerk-Datenverkehrsmanager.

## Revendications

1. Procédé (20) pour gérer une base de données (4), comprenant de :
déterminer (21) un intervalle de temps (T) qui correspond à la période temporelle maximale pendant laquelle une entrée de base de données (4i) doit rester dans la base de données (4) avant d'être supprimée ;
diviser (22) l'intervalle de temps (T) en au moins une première et une seconde tranche de temps (t1, t2, ..., tn);
mettre à jour (23) au moins une première et une seconde base de données de tranches (3a, 3b, ..., 3n) avec des événements de base de données, dans lequel lesdites au moins une première et seconde bases de données de tranches (3a, 3b, ..., 3n) sont créées en tant que copies de la base de données (4) ; et
une fois qu'une période temporelle (T1) correspondant à la durée de la première tranche de temps (t1) s'est écoulée, remplacer (25) la première base de données de tranches (3a) par la seconde base de données de tranches (3b), et remplacer la seconde base de données de tranches par une nouvelle seconde base de données de tranches (3b) ;
dans lequel mettre à jour (23) au moins les première et seconde bases de données de tranches (3a, 3b, ..., 3n) avec des événements de base de données comprend de :
vérifier à quel paquet de données les événements de base de données appartiennent, dans lequel les événements de base de données sont la réception d'un nouveau paquet de données ou la transmission d'un paquet de données ;
si les événements de base de données couvrent toutes les tranches de temps (t1, t2, ..., tn), alors il est déterminé que les événements de base de données appartiennent à des paquets de données qui étaient déjà dans la base de données pendant la première tranche de temps (t1), dans lequel ces paquets de données sont les paquets de données les plus anciens et sont donc les premiers à expirer une fois que la période temporelle (T1) correspondant à la durée de la première tranche de temps (t1) s'est écoulée, dans lequel des informations relatives à cet événement de base de données sont pertinentes pour la version la plus ancienne de la base de données, qui est la première base de données de tranches (3a) ;
mettre à jour la première base de données de tranches (3a) ;
s'il est déterminé que les événements de base de données se rapportent à des paquets de données qui ont été inclus dans la base de données dans une tranche de temps (t2, ..., tn) postérieure à la première tranche de temps (t1) :
mettre à jour la seconde base de données de tranches ainsi que les suivantes (3b, ..., 3n).

2. Procédé (20) selon la revendication 1, comprenant en outre de :
diviser (32) un stockage de base de données (2) en au moins une première et une seconde zone de stockage (2a, 2b, ..., 2n) et mettre à jour les première et seconde zones de stockage (2a, 2b, ..., 2n) avec des événements de base de données ; et
une fois que la période temporelle (T1) correspondant à la durée de la première tranche de temps (t1) s'est écoulée, déclarer (35) la seconde zone de stockage (2b) en tant que première zone de stockage (2a), et
écraser la première zone de stockage précédente (2a) avec des entrées de base de données d'une seconde zone de stockage nouvellement déclarée.

3. Procédé (20) selon l'une des revendications 1 et 2, comprenant en outre de :
diviser (42) une file d'attente de traitement de base de données (5) en au moins une première et une seconde file d'attente partielle (5a, 5b, ..., 5n), la première file d'attente partielle (5a) comprenant des éléments de file d'attente (6i) qui doivent expirer après la fin de la première tranche de temps (t1), et la seconde file d'attente partielle (5b) comprenant des éléments de file d'attente (6i) qui ne doivent pas expirer après la fin de la première tranche de temps (t1) ; et
une fois que la période temporelle (T1) correspondant à la durée de la première tranche de temps (t1) s'est écoulée, remplacer (45) le premier pointeur de file d'attente (7a) par le second pointeur de file d'attente (7b) et créer un nouveau second pointeur de file d'attente en tant que copie du second pointeur de file d'attente précédent (7b).

4. Procédé (20) selon la revendication 3, dans lequel les premier et second pointeurs de files d'attente (7a, 7b) pointent vers la tête des première et seconde files d'attente partielles (5a, 5b, ..., 5n), respectivement.

5. Procédé (20) selon la revendication 3, dans lequel les premier et second pointeurs de files d'attente (7a, 7b) pointent vers la queue des première et seconde files d'attente partielles (5a, 5b, ..., 5n), respectivement.

6. Procédé (20) selon l'une des revendications 1 à 5, dans lequel un accès de travail à la seconde base de données de tranches (3b) est refusé avant que la période temporelle (T1) correspondant à la durée de la première tranche de temps (t1) se soit écoulée.

7. Procédé (20) selon l'une des revendications 1 à 6, dans lequel la base de données (4) est une base de données pour un dispositif de réseau (10a), et dans lequel l'intervalle de temps (T) est le temps d'aller-retour (RTT) qui indique la période temporelle maximale qui s'écoule entre la transmission d'un paquet de données à n'importe quel noeud de réseau du réseau (10) et la réception d'un paquet de données de réponse au niveau du dispositif de réseau (10a).

8. Système de base de données (1), comprenant :
un stockage de base de données (2) configuré pour stocker des entrées de base de données (4i) d'une base de données principale (4) ;
au moins une première et une seconde base de données de tranches (3a, 3b, ..., 3n) ;
un contrôleur de mise à jour de base de données (8) configuré pour déterminer un intervalle temporel (T) qui correspond à la période temporelle maximale pendant laquelle une entrée de base de données (4i) doit rester dans la base de données (4) avant d'être supprimée, diviser l'intervalle de temps (T) en au moins une première et une seconde tranche de temps (t1 ; t2), et mettre à jour au moins une première et une seconde base de données de tranches (3a, 3b, ..., 3n) avec des événements de base de données, dans lequel au moins les au moins une première et seconde base de données (3a, 3b, ..., 3n) sont créées en tant que copies de la base de données principale (4) ; et
un contrôleur de vieillissement de base de données (9) configuré pour remplacer la première base de données de tranches (3a) par la seconde base de données de tranches (3b), et remplacer la seconde base de données de tranches par une nouvelle seconde base de données de tranches (3b) après qu'une période temporelle (T1) correspondant à la durée de la première tranche de temps (t1) s'est écoulée ;
dans lequel le contrôleur de mise à jour de base de données (8) configuré pour mettre à jour au moins la première et la seconde base de données de tranches (3a, 3b, ..., 3n) avec des événements de base de données comprenant de :
vérifier à quel paquet de données les événements de base de données appartiennent, dans lesquels les événements de base de données sont la réception d'un nouveau paquet de données ou la transmission d'un paquet de données ;
si les événements de base de données couvrent toutes les tranches de temps (t1, t2, ..., tn), alors il est déterminé que les événements de base de données appartiennent à des paquets de données qui étaient déjà dans la base de données pendant la première tranche de temps (t1), dans lequel ces paquets de données sont les paquets de données les plus anciens et sont donc les premiers à expirer une fois que la période temporelle (T1) correspondant à la durée de la première tranche de temps (t1) s'est écoulée, dans lequel des informations relatives à cet événement de base de données sont pertinentes pour la version la plus ancienne de la base de données, qui est la première base de données de tranches (3a) ;
mettre à jour la première base de données de tranches (3a) ;
s'il est déterminé que les événements de base de données se rapportent à des paquets de données qui ont été inclus dans la base de données dans une tranche de temps (t2, ..., tn) postérieure à la première tranche de temps (t1) :
mettre à jour la seconde base de données de tranches ainsi que les suivantes (3b, ..., 3n).

9. Système de base de données (1) selon la revendication 8, dans lequel le stockage de base de données (2) est divisé en au moins une première et une seconde zone de stockage (2a, 2b, ..., 2n),
dans lequel le contrôleur de mise à jour de base de données (8) est configuré pour mettre à jour les première et seconde zones de stockage (2a, 2b, ..., 2n) avec des événements de base de données, et
dans lequel le contrôleur de vieillissement de base de données (9) est configuré pour déclarer la seconde zone de stockage (2b) en tant que première zone de stockage (2a) et pour amener la première zone de stockage précédente (2a) à être écrasée par des entrées de base de données d'une seconde zone de stockage nouvellement déclarée après que la période temporelle (T1) correspondant à la durée de la première tranche de temps (t1) s'est écoulée.

10. Système de base de données (1) selon l'une des revendications 8 et 9, comprenant en outre :
une file d'attente de traitement de base de données (5), qui est divisée en au moins une première et une seconde file d'attente partielle (5a, 5b, ..., 5n), la première file d'attente partielle (5a) comprenant des éléments de file d'attente (6i) qui doivent expirer après la fin de la première tranche de temps (t1), et la seconde file d'attente partielle (2b) comprenant des éléments de file d'attente (6i) qui ne doivent pas expirer après la fin de la première tranche de temps (t1) ; et
un contrôleur de pointeur de file d'attente de base de données (11) qui est configuré pour créer un premier pointeur de file d'attente (7a) qui pointe vers le premier élément de la première file d'attente partielle, un second pointeur de file d'attente (7b) qui pointe vers le premier élément de la seconde file d'attente partielle (5b), et qui est configuré pour remplacer le premier pointeur de file d'attente (7a) par le second pointeur de file d'attente (7b), et pour créer un nouveau second pointeur de file d'attente en tant que copie du second pointeur de file d'attente précédent (7b) après que la période temporelle (T1) correspondant à la durée de la première tranche de temps (t1) s'est écoulée.

11. Système de base de données (1) selon la revendication 10, dans lequel les premier et second pointeurs de files d'attente (7a, 7b) pointent vers la tête des première et seconde files d'attente partielles (5a, 5b, ..., 5n), respectivement.

12. Système de base de données (1) selon la revendication 10, dans lequel les premier et second pointeurs de files d'attente (7a, 7b) pointent vers la queue des première et seconde files d'attente partielles (5a, 5b, ..., 5n), respectivement.

13. Système de base de données (1) selon l'une des revendications 8 à 12, dans lequel le système de base de données (1) est configuré pour refuser un accès de travail à la seconde base de données de tranches (3b) avant que la période temporelle (T1) correspondant à la durée de la première tranche de temps (t1) se soit écoulée.

14. Dispositif de réseau (10a), comprenant un système de base de données (1) selon l'une des revendications 8 à 13, dans lequel la base de données (4) est une base de données pour le dispositif de réseau (10a), et dans lequel l'intervalle de temps (T) est le temps d'aller-retour (RTT) qui indique la période temporelle maximale qui s'écoule entre la transmission d'un paquet de données à n'importe quel noeud de réseau du réseau (10) et la réception d'un paquet de données de réponse au niveau du dispositif de réseau (10a).

15. Dispositif de réseau (10a) selon la revendication 14, dans lequel le dispositif de réseau (10a) est l'un parmi le groupe constitué par un routeur de réseau, un commutateur de réseau, une passerelle de réseau, un pont de réseau ou d'un gestionnaire de trafic de réseau.
